# EUROPÄISCHE PATENTSCHRIFT

(11) **EP 1 088 941 B1**
(45) Veröffentlichungstag und Bekanntmachung des Hinweises auf die Patenterteilung: **21.06.2006**
(21) Anmeldenummer: 99119582.7
(22) Anmeldetag: 02.10.1999
(51) Int. Cl.: E01C 11/22

(54) **Enwässerungsrinne sowie Rinnenelement hierfür**
Gutter and gutter element therefor
Caniveau et élément de caniveau pour celui-ci

(43) Veröffentlichungstag der Anmeldung: 04.04.2001
(73) Patentinhaber: Kombilith GmbH Entwicklung und Verwertung, 40213 Düsseldorf (DE)
(72) Erfinder: Schröder, Detlef, Dipl.-Ing., CH-6714 Semione Ticino (CH)
(74) Vertreter: Hauck, Graalfs, Wehnert, Döring, Siemons

(56) Entgegenhaltungen:
- DE-U- 9 205 884
- DE-U- 29 614 953
- DE-U- 29 619 461
- DE-U- 29 800 119
- GB-A- 2 168 399

## Beschreibung

Die vorliegende Erfindung betrifft eine Entwässerungsrinne für Straßen, Wege, u.dgl. mit den Merkmalen des oberbgriffs von Patentanpruch 1 sowie ein Rinnenelement zur Herstellung einer derartigen Entwässerungsrinne.

Die Entwässerungsanlagen stellen die kritischsten Punkte sowohl im Straßenbau und Wegebau als auch bei der Platz- und Freiflächengestaltung dar. Derartige Entwässerungsanlagen besitzen Entwässerungsrinnen, die das abfließende Wasser auffangen und beispielsweise über Abläufe der Kanalisation zuführen. Derartige Entwässerungsrinnen werden grundsätzlich zuerst gebaut und sind in der Regel bis zur Verlegung des anschließenden Pflasters über einen längeren Zeitraum den unterschiedlichsten Belastungen ausgesetzt, die oft zu Beschädigungen führen, welche in der Regel nur unzureichend wieder behoben werden. Darüber hinaus ist der Bau der Rinnen zeitintensiv und erfordert die fachliche Qualifikation von Pflasterern.

Es ist bekannt, derartige Entwässerungsrinnen aus rechtekkigen Steinen oder Platten zu erstellen, wobei diese Steine oder Platten in einem Mörtelbett oder Betonbett verlegt werden. Je nach gewünschter Neigung der Rinnenseiten werden dabei die entsprechenden Steine oder Platten geneigt angeordnet. Derartige Rinnenkonstruktionen sind anfällig für Fehler bei der Bauausführung. Diese Fehler erhöhen das Schadensrisiko während der Bauausführung und in der Gebrauchsphase.

Aus der DE 92 05 884 U sind Rinnenelemente bekannt, die sich über die gesamte Breite der Entwässerungsrinne erstrecken. Bei diesen bekannten Rinnenelementen verläuft der Flächenversatz parallel zur Rinnenlängsrichtung. Hierdurch ist die Verbundwirkung zwischen benachbarten Rinnenelementen insbesondere bei Belastungen in Querrichtung der Rinne nicht optimal.

Aus der GB-A-2 168 399 ist eine Entwässerungsrinne bekannt, bei der sich die Rinnenelemente nur über einen Teil der Breite der Entwässerungsrinne erstrecken. Hierbei kommen Rinnenelemente zum Einsatz, die aus zwei miteinander verbundenen Abschnitten bestehen, von denen der eine als Rechteckabschnitt und der andere als Achteckabschnitt ausgebildet ist. Bei der in dieser Veröffentlichung dargestellten Entwässerungsrinne sind in Längsrichtung derselben keine versetzt zueinander angeordneten Rinnenelemente vorgesehen, da dies bei der im Querschnitt dargestellten Ausführungsform nicht möglich ist.

Der Erfindung liegt die Aufgabe zugrunde, eine Entwässerungsrinne der eingangs beschriebenen Art zu schaffen, die insbesondere in Querrichtung besonders belastungsfähig ist und eine hohe Standfestigkeit aufweist.

Diese Aufgabe wird erfindungsgemäß bei einer Entwässerungsrinne der angegebenen Art durch die kennzeichnenden Merkmale von Patentanspruch 1 gelöst.

Weiterbildungen der Erfindung gehen aus den Unteransprüchen hervor.

Der wesentliche Gedanke der Erfindung besteht darin, die Entwässerungsrinne aus formschlüssig ineinandergreifenden Rinnenelementen zu erstellen, so daß sich zwischen den einzelnen Rinnenelementen ein Verbundeffekt ergibt, der für eine sehr hohe Standfestigkeit der Entwässerungsrinne während der Bauzeit und nach Fertigstellung bei hoher Verkehrsbelastung sorgt.

Desweiteren setzt sich die Entwässerungsrinne aus Rinnenelementen zusammen, von denen zumindest ein Teil eine einseitig oder beidseitig abgestufte oder zumindest teilweise einseitig oder beidseitig geneigte Oberfläche besitzt. Mit anderen Worten, die Oberseite von einem Teil der Rinnenelemente oder von allen Rinnenelementen ist abgestuft oder geneigt ausgebildet, so daß zum Erreichen einer abgestuften oder geneigten Oberseite keine Steine im Versatz oder in geneigter Lage verlegt werden müssen.

Die hier in Rede stehenden Entwässerungsrinnen besitzen in der Regel Muldenform. Bei dieser Ausführungsform kommen Rinnenelemente mit entsprechend ausgebildeter Oberseite zur Anwendung, wobei die Oberseite beidseitig entgegengesetzt geneigt oder abgestuft ist. Ist die Entwässerungsrinne nur einseitig geneigt oder abgestuft, wie dies der Fall ist, wenn sie auf der anderen Seite beispielsweise von einem Bordstein begrenzt ist, kommen Rinnenelemente zur Anwendung, die nur einseitig geneigt oder abgestuft sind.

Die erfindungsgemäße Lösung bezieht sich auf Entwässerungsrinnen, bei denen sich die Rinnenelemente nur über einen Teil der Breite der Entwässerungsrinne erstrecken, d.h. über die Breite der Rinne mehrere Elemente angeordnet sind. Dabei können über die Breite der Rinne gesehen vorzugsweise zwei oder drei Rinnenelemente Verwendung finden.

Für diese Fälle ist wesentlich, daß benachbarte Rinnenelemente formschlüssig aneinanderliegen, so daß die gewünschte Verbundwirkung entsteht.

Diese Verbundwirkung wird dadurch erreicht, daß die Rinnenelemente über linear verlaufende Begrenzungsflächen formschlüssig miteinander in Eingriff stehen. Um einen Formschluß bei linear verlaufenden Begrenzungsflächen zu erreichen, besitzen die Rinnenelemente polygonartig vor springende Begrenzungsflächenabschnitte zu den Nachbarelementen, die mit entsprechenden vorspringende Abschnitten von benachbarten Rinnenelementen zur anlage kommen.

Insgesamt ist zu sagen, daß sich die wirksamen Verbundflächen oder Verbundabschnitte normalerweise über die gesamte Höhe eines Rinnenelementes erstrecken, sich aber auch nur über einen Teil der Höhe erstrecken können. Beispielsweise verbleiben dann im oberen Bereich Fugen, die in geeigneter Weise verfüllt werden können. Normalerweise ist ein relativ großer Versatz in den Berührungsflächen zu den Nachbarelementen vorhanden, was die Verbundwirkung begünstigt. Einzelne aneinandergrenzende Rechteckflächen eines Elementes können aber auch nur mit einem Teil ihrer gesamten Berührkanten aneinander liegen.

Vorzugsweise besitzen die Rinnenelemente senkrecht ausgebildete Steinflanken (seitliche Begrenzungsflächen), an die sich beispielsweise die lotrechten Steinflanken der Steine eines angrenzenden Pflasters anschließen. Bei einer Ausführungsform der Erfindung sind jedoch die den Rinnenrand bildenden Begrenzungsflächen der Rinnenelemente gegenüber der Senkrechten schräg ausgebildet, beispielsweise in Anpassung an das Quergefälle des angrenzenden Pflasters. In diesem Fall entsteht bei Vorhandensein eines derartigen Quergefälles eine über die gesamte Höhe gleich breite Fuge zwichen dem Rinnenstein und dem angrenzenden Pflasterstein.

Die Unterseite der Rinnenelemente ist den technischen Erfordernissen angepaßt und in der Regel eben. Rinnenelemente mit ebener Unterseite ermöglichen die Verlegung auf einem ebenen, im Rinnengefälle abgezogenen Betonbett und führen damit zu einer deutlichen Arbeitserleichterung. Die Unterseite der Rinnenelemente kann jedoch auch zur besseren Haftung im Betonbett profiliert sein, beispielsweise mit entsprechenden Längsrillen versehen sein.

Wenn vorstehend davon gesprochen wird, daß die Oberseite des Rinnenelementes geneigt oder abgestuft ausgebildet ist, so schließt dies natürlich auch eine gekrümmte Ausgestaltung ein, entweder nach oben konkav oder nach oben konvex ausgebildet.

Bei einer weiteren bevorzugten Ausführungsform der Erfindung besitzen die Rinnenelemente Scheinfugen. Auf diese Weise läßt sich der Eindruck einer mit relativ kleinen Steinen gepflasterten Entwässerungsrinne vermitteln, obwohl in Wirklichkeit größere Stein- oder Plattenelemente Verwendung finden. Über derartige Scheinfugen lassen sich verschiedenartige Verlegemuster gestalten. Beispielsweise können auch bei gekrümmt verlaufenden echten Fugen geradlinig verlaufende Scheinfugen in Längs- und/oder Querrichtung der Entwässerungsrinne vorgesehen sein oder umgekehrt.

Die Erfindung betrifft ferner ein Rinnenelement zur Herstellung einer Entwässerungsrinne der vorstehend wiedergegebenen Art. Ein derartiges Rinnenelement erstreckt sich nur über einen Teil der Breite der Entwässerungsrinne, wobei in diesem Fall vorzugsweise ein Verhältnis 1/3 zu 2/3 existiert. Hierbei besitzt das sich über 2/3 der Rinnenbreite erstreckende Rinnenelement an seiner Oberseite vorzugsweise eine sich über die äußere Hälfte des Steines erstreckende Neigung, während die innere Hälfte eben verläuft. Das sich über 1/3 der Breite erstreckende Element hat eine sich über die gesamte Oberseite erstreckende Neigung mit entgegengesetztem Gefälle, so daß insgesamt eine Mulde entsteht. Beliebig viele andere Kombinationsmöglichkeiten liegen im Rahmen der Erfindung.

Das hier beschriebene Rinnenelement ist vorzugsweise als Betonstein oder Betonplatte ausgebildet.

Die Erfindung wird nachfolgend anhand von Ausführungsbeispielen in Verbindung mit der Zeichnung im einzelnen erläutert. Es zeigen:
- Figur 1: eine räumliche Ansicht eines Teiles einer ersten Ausführungsform einer Entwässerungsrinne;
- Figur 2: einen Querschnitt durch eine Entwässerungsrinne mit angrenzendem Pflaster, wobei das Rinnenelement nur schematisch darsgestellt ist;
- Figur 3: einen Querschnitt durch eine andere Ausführungsform einer Entwässerungsrinne, wobei das Rinnenelement ebenfalls nur schematisch dargestellt ist;
- Figur 4: einen Querschnitt durch noch eine andere Ausführungsform einer Entwässerungsrinne;

- Figur 5: eine Draufsicht auf eine Entwässerungsrinne mit einem anderen Verbundmuster;
- Figur 6: eine Draufsicht auf eine weitere Entwässerungsrinne mit Flächenversatz senkrecht zur Rinnenlängsrichtung;
- Figur 7: eine Draufsicht auf noch eine weitere Entwässerungsrinne;
- Figur 8: eine räumliche Darstellung einer durch einen Bordstein begrenzten Entwässerungsrinne;
- Figur 9: einen Querschnitt durch ein auf einem Betonbett verlegtes Rinnenelement in schematischer Darstellung mit profilierter Unterseite.

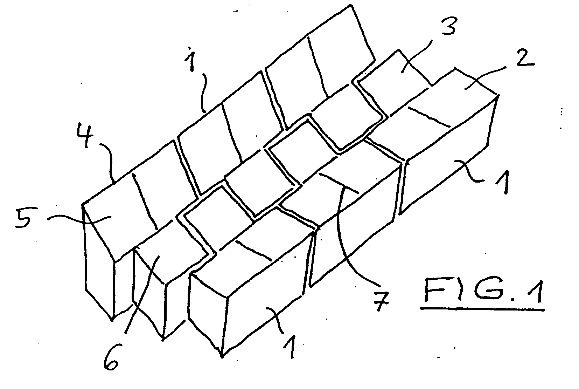

Figur 1 zeigt in räumlicher Ansicht einen Teil einer ersten Ausführungsform einer Entwässerungsrinne. Die Entwässerungsrinne besteht aus einer Vielzahl von Rinnenelementen 1, die durch Flächenversatz formschlüssig aneinandergesetzt sind. Die Rinnenelemente 1 sind auf einem Betonbett verlegt, das in Figur 1 nicht dargestellt ist. Durch den in Figur 1 gezeigten Verbund enthält die Rinne an ihrer Oberseite eine Muldenform.

Ein Rinnenelement 1 setzt sich in der Draufsicht aus zwei Rechteckabschnitten 2 und 3 zusammen, wobei der Rechteckabschnitt 3 kleiner ausgebildet ist als der Rechteckabschnitt 2 und gegenüber dem Rechteckabschnitt 2 von den Außenkanten nach innen versetzt angeordnet ist. Der große Rechteckabschnitt 2 besitzt eine Scheinfuge 7, die dem Stein das Aussehen vermittelt, als ob er aus drei Pflastersteinen bestehen würde.

Auf der gegenüberliegenden Seite der Entwässerungsrinne befindet sich ebenfalls eine Vielzahl von Rinnenelementen 1 mit identischer Form. Diese sind versetzt zu den Steinen auf der gegenüberliegenden Seite angeordnet, wobei der nach innen weisende kleine Rechteckabschnitt 6 in die entsprechenden Lücken zwischen den Rechteckabschnitten 3 und gegenüberliegenden Steinen eingepaßt ist.

Die großen Rechteckabschnitte 2 und 5 der Elemente weisen eine zur Mitte hin abgeschrägte Oberseite auf, während die Oberseite der kleinen Rechteckabschnitte 3 und 6 eben ausgebildet ist, so daß sich die erwähnte Muldenform ergibt.

Die in Figur 1 dargestellte Entwässerungsrinne hat somit in Längsrichtung und in Querrichtung keine durchlaufenden Fugen, so daß sie besonders belastungsfähig ist und eine hohe Standfestigkeit aufweist.

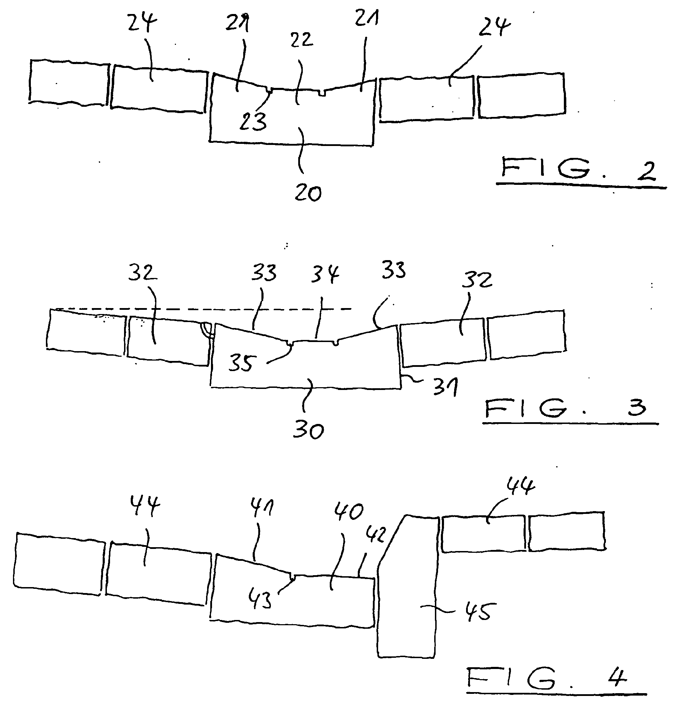

Figur 2 zeigt einen Querschnitt durch eine Entwässerungsrinne mit angrenzenden Pflastersteinen. Die Rinne selbst wird hierbei im Querschnits von zwei Rinnenelementen gebildet, die schematisch als ein Rinnenelement 20 dargestellt sind, dessen Oberseite Muldenform besitzt und zwei äußere, schräg nach innen geneigte Abschnitte 21 und einen mittleren ebenen Abschnitt 22 aufweist. Diese Abschnitte sind durch Scheinfugen 23 voneinander getrennt. Seitlich schließen sich an das Entwässerungselement 20 Pflastersteine 24 an.

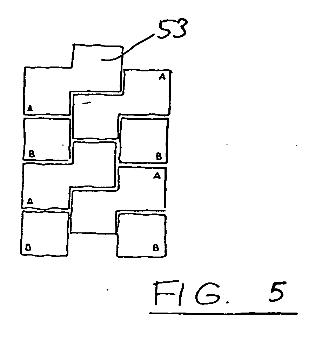

Figur 3 zeigt eine Ausführungsform einer Entwässerungsrinne, bei der ebenfalls in Querrichtung zwei Rinnenelemente vorhanden sind (als Rinnenelement 30 gezeigt) und an ihrer Oberseite zwei äußere Schrägabschnitte 33 und einen mittleren ebenen Abschnitt 34 aufweisen, die durch Scheinfugen 35 voneinander getrennt sind. Bei dieser Ausführungsform sind die Außenflanken 31 des Elementes 30 in Anpassung an das Quergefälle der benachbarten Pflastersteine 32 schräg ausgebildet, so daß sich zwischen den Steinen 30 und 32 keine sich erweiternden Fugen ergeben.

Figur 4 zeigt eine Entwässerungsrinne, die in Querrichtung aus einem einzigen Rinnenelement 40 besteht, das einen in der Figur linken geneigten Abschnitt 41 und rechten ebenen Abschnitt 42 aufweist, welche durch eine Scheinfuge 43 voneinander getrennt sind. Die in Figur 4 rechte Begrenzung der Entwässerungsrinne wird von einem Bordstein 45 gebildet. An den Bordstein 45 sowie das Rinnenelement 40 schließen sich Pflastersteine 44 an.

Die nachfolgenden Figuren 5 bis 7 zeigen Draufsichten auf Teile von Entwässerungsrinnen, aus denen die Form der verwendeten Rinnenelemente sowie die Art des Verlegeverbundes erkennbar sind.

Figur 5 zeigt Rinnenelemente 53, die im Grundriß aus 2 aneinander grenzenden Rechtecken bestehen, welche ebenfalls nur über einen Teil ihrer Berührkanten aneinander liegen.

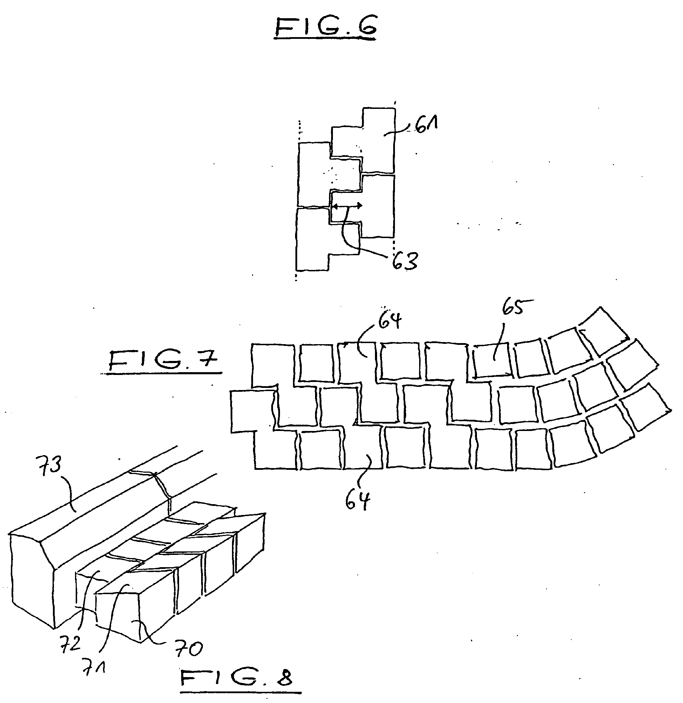

Fig. 6 zeigt eine weitere Ausführungsform einer Entwässerungsrinne, bei der der Flächenversatz quer zur Rinnenlängsrichtung, wie bei 63 mit Elementen 61 gezeigt, verläuft.

Figur 7 zeigt eine Draufsicht auf eine Entwässerungsrinne, die aus Rinnenelementen 64 zusammengesetzt ist, welche sich im Grundriß aus zwei gleich großen Rechtecken zusammensetzen. Über die Breite der Rinne kommen hierbei zwei Rinnenelemente 64 zum Einsatz. Im Kurvenbereich der Entwässerungsrinne werden Einzelelemente 65 mit Rechteck- bzw. Quadratform eingesetzt.

Figur 8 zeigt eine Entwässerungsrinne, deren einer Rand von Bordsteinen 73 gebildet wird, gegen die Rinnenelemente 70 der in Figur 6 gezeigten Art stoßen. Von den Elementen 70 wird eine einseitig geneigte Mulde gebildet, deren anderer Rand von den Bordsteinen 73 gebildet wird.

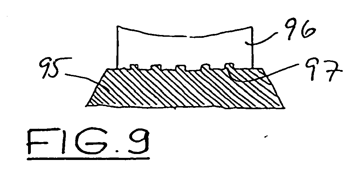

Figur 9 zeigt einen Querschnitt durch eine Entwässerungsrinne, bei der sich Rinnenelemente 96 schematisch dargestellt auf einem Betonbett 95 befinden, die an ihrer Unterseite in Abständen Längsrillen 97 aufweisen, um eine bessere Haftung auf dem Betonbett herzustellen.

Abschließend sei noch erwähnt, daß die erfindungsgemäß ausgebildete Entwässerungsrinne eine ausgeprägte Widerlagerfunktion besitzt und einfach und kostengünstig hergestellt werden kann.

## Patentansprüche

1. Entwässerungsrinne für Straßen, Wege u.dgl. mit einer Vielzahl von formschlüssig ineinander greifenden Rinnenelementen (1, 53, 60, 64, 70, 90), von denen zumindest ein Teil eine abgestufte oder zumindest teilweise einseitig geneigte Oberseite besitzt, wobei sich die Rinnenelemente (1, 53, 60, 64, 70, 90) nur über einen Teil der Breite der Entwässerungsrinne erstrecken, **dadurch gekennzeichnet, daß** sich die Rinnenelemente (1, 53, 60, 64, 70, 90) in Längsrichtung der Entwässerungsrinne jeweils im Grundriß aus zwei nebeneinander und versetzt zueinander angeordneten Rechteckabschnitten (2, 3; 71, 72; 91) zusammensetzen und daß die Entwässerungsrinne von in Längsrichtung derselben nebeneinander und versetzt zueinander angeordneten Rinnenelementen (1, 53, 60, 64, 70, 90) gebildet ist.

2. Entwässerungsrinne nach Anspruch 1, **dadurch gekennzeichnet, daß** die Rinnenelemente (1, 61) einen großen und kleinen Rechteckabschnitt (2, 3) aufweisen und daß jeweils benachbarte versetzte Rinnenelemente (1, 61) mit den kleinen Rechteckabschnitten (3) zur Achse der Entwässerungsrinne nach innen weisend angeordnet sind, wobei die nach innen weisenden kleinen Rechteckabschnitte (3) in die entsprechenden Lücken zwischen den kleinen Rechteckabschnitten (3) der benachbarten Rinnenelemente (1, 61) eingepaßt sind.

3. Entwässerungsrinne nach Anspruch 1 oder 2, **dadurch gekennzeichnet, daß** benachbarte versetzte Rinnenelemente (1, 53, 60, 64, 70, 90) jeweils eine abgestufte oder entgegengesetzt geneigte Oberseite zur Ausbildung einer Mulde aufweisen.

4. Entwässerungsrinne nach Anspruch 3, **dadurch gekennzeichnet, daß** die Muldenränder unterschiedlich hoch ausgebildet sind.

5. Entwässerungsrinne nach einem der vorangehenden Ansprüche, **dadurch gekennzeichnet, daß** die den Rinnenrand bildenden Begrenzungsflächen (31) der Rinnenelemente schräg zur Unterseite ausgebildet sind.

6. Entwässerungsrinne nach einem der vorangehenden Ansprüche, **dadurch gekennzeichnet, daß** die Rinnenelemente an ihrer Unterseite (bei 97) profiliert sind.

7. Entwässerungsrinne nach einem der vorangehenden Ansprüche, **dadurch gekennzeichnet, daß** die Rinnenelemente (1, 53, 60, 64, 70, 90) Scheinfugen (7) besitzen.

8. Rinnenelement zur Herstellung einer Entwässerungsrinne nach einem der Ansprüche 1 bis 7, **dadurch gekennzeichnet, daß** das Rinnenelement eine abgestufte oder zumindest teilweise einseitig geneigte Oberseite besitzt und im Grundriß aus zwei nebeneinander und versetzt zueinander angeordneten Rechteckabschnitten zusammengesetzt ist.

## Claims

1. A gutter for roads, ways etc. comprising a plurality of positively engaging gutter elements (1, 53, 60, 64, 70 90) of which at least a part has a stepped or at least partly one-sided inclined upper side, wherein the gutter elements (1, 53, 60, 64, 70, 90) extend only over a part of the width of the gutter, **characterized in that** the gutter elements (1, 53, 60, 64, 70 90), in longitudinal direction of the gutter, in the plan view are composed of two adjacent and offset rectangular portions (2, 3; 71, 72; 91), respectively, and **in that** the gutter is formed by gutter elements (1, 53, 60, 64, 70, 90) which are disposed adjacent and offset with respect to one another.

2. The gutter according to claim 1, **characterized in that** the gutter elements (1, 61) have a large and a small rectangular portion (2, 3) and that adjacent offset gutter elements (1, 61) are so disposed that the small rectangular portions (3) are directed inwardly towards the axis of the gutter, wherein the inwardly directed small rectangular portions (3) are fitted into the corresponding gaps between the small rectangular portions (3) of the adjacent gutter elements (1, 61).

3. The gutter according to claim 1 or 2, **characterized in that** adjacent offset gutter elements (1, 53, 60, 64, 70, 90) have a stepped or oppositely inclined upper side for the formation of a trough, respectively.

4. The gutter according to claim 3, **characterized in that** the edges of the troughs are differently high.

5. The gutter according to one of the preceding claims, **characterized in that** the limiting surfaces (31) of the gutter elements forming the trough edge are inclined with respect to the lower side.

6. The gutter according to one of the preceding claims, **characterized in that** the gutter elements are profiled at their lower side (at 97).

7. The gutter according to one of the preceding claims, **characterized in that** the gutter elements (1, 53, 60, 64, 70, 90) have dummy joints (7) .

8. A gutter element for the production of a gutter according to one of the claims 1 to 7, **characterized in that** the gutter element has a stepped or at least partly one-sided inclined upper side and, in the plan view, is composed of two rectangular portions which are disposed adjacent and offset with respect to one another.

## Revendications

1. Caniveau pour rues, chemins et similaires avec une pluralité d'éléments (1, 53, 60, 64, 70, 90) de caniveau s'emboîtant intimement l'un dans l'autre, dont au moins une partie a un côté supérieur dégradé ou en partie incliné d'un côté, les éléments (1, 53, 60, 64, 70, 90) de caniveau ne s'étendant que sur une partie de la largeur du caniveau, **caractérisé en ce que** les éléments (1, 53, 60, 64, 70, 90) de caniveau, dans le sens longitudinal du caniveau, se composent respectivement, en plan, de deux sections rectangulaires (2, 3 ; 71, 72 ; 91) disposées l'une à coté de l'autre et décalées l'une par rapport à l'autre et **en ce que** le caniveau est formé, dans le sens longitudinal, par les mêmes éléments (1, 53, 60, 64, 70, 90) de caniveau disposés l'un à coté de l'autre et décalés l'un par rapport à l'autre.

2. Caniveau selon la revendication 1, **caractérisé en ce que** les éléments (1, 61) de caniveau présentent une grande et une petite section rectangulaire (2, 3) et **en ce que** les éléments (1, 61) voisins décalés sont chaque fois disposés avec les petites sections rectangulaires (3) orientées vers l'intérieur par rapport à l'axe du caniveau, les petites sections rectangulaires (3) orientées vers l'intérieur s'insérant dans les trous correspondants entre les petites sections rectangulaires (3) des éléments (1, 61) de caniveau voisins.

3. Caniveau selon la revendication 1 ou 2, **caractérisé en ce que** des éléments (1, 53, 60, 64, 70, 90) de caniveau voisins décalés présentent respectivement un côté supérieur dégradé ou incliné en sens inverse pour former une cavité.

4. Caniveau selon la revendication 3, **caractérisé en ce que** les bords de la cavité sont conformés avec des hauteurs différentes.

5. Caniveau selon une des revendications précédentes, **caractérisé en ce que** les surfaces périphériques (31) des éléments de caniveau formant le bord du caniveau sont formées en oblique par rapport au côté inférieur.

6. Caniveau selon une des revendications précédentes, **caractérisé en ce que** les éléments de caniveau sont profilés sur leur côté inférieur (en 97).

7. Caniveau selon une des revendications précédentes, **caractérisé en ce que** les éléments (1, 53, 60, 64, 70, 90) de caniveau ont de faux joints (7).

8. Élément de caniveau pour fabriquer un caniveau selon une des revendications 1 à 7, **caractérisé en ce que** l'élément de caniveau a un côté supérieur dégradé ou au moins en partie incliné d'un côté et est composé, en plan, de deux sections rectangulaires disposées l'une à côté de l'autre et décalées l'une par rapport à l'autre.
